Europäisches Patentamt

European Patent Office

Office européen des brevets

(11) Publication number: **0 013 374**
**A1**

## EUROPEAN PATENT APPLICATION

(21) Application number: **79105136.0**

(22) Date of filing: **13.12.79**

(51) Int. Cl.³: **B 23 K 35/06**
**B 23 K 9/04, B 23 K 9/18**

(30) Priority: **18.12.78 US 970412**

(43) Date of publication of application:
**23.07.80 Bulletin 80/15**

(84) Designated Contracting States:
**DE GB SE**

(71) Applicant: **LUMMUS GmbH**
**Abraham Lincoln Strasse 1**
**D-6200 Wiesbaden(DE)**

(72) Inventor: **Powell, Waylon C.**
**3313 Mountain View Drive**
**Chattanooga, Tennessee(US)**

(72) Inventor: **Underwood, James Robert**
**Routes, Box 415**
**Cleveland, Tennessee(US)**

(72) Inventor: **Barger, John Joseph**
**103 Barger Street**
**Ringgold, Georgia(US)**

(54) **Strip electrode welding apparatus.**

(57) The feed rolls (14,15) of a welding head (11) advance a strip-electrode (10) while reforming the body of the strip to add to its columnar strength. The strengthened electrode is without external support as it extends from the welding head current contact tip (17) to the work surface (13) clad by the welding process, the reformed strip-electrode is disclosed by conforming, in its plane transverse its longitudinal axis, to an arc deep enough to provide sufficient columnar strength to give stability to its end from which the electric arc to the work surface is supported.

EP 0 013 374 A1

Croydon Printing Company Ltd.

pulling this strip through a strip feed unit where welding current is applied to the strip and flux to the welding arc. The welding head contains the feed rolls and the stationary electrical contact with the strip being pulled between the upper feed roll and idler and also the lower feed roll and contact tip. The strip extension, distance from contact tip to work, will vary with different applications for controlling $I^2R$ resistant heating.

It takes little imagination to guess at the multitude of problems solved by inventions in the welding art as applied to cladding with strip-electrodes. The present problem developed with a failure to provide an adequate external stabilizing support for the strip extending down from the weld-head to the welding arc fusing the material of the strip and the working surface together. As in all welding processes, uniformity is always desirable. A relatively thin strip of stainless steel spit from the welding head tends to waver as it is stroked across the working surface and fed into the process at the welding arc. Mechanical stability must be provided to overcome the forces on the strip. Some of the forces on the strip are the permanent coil given to the strip by being placed in a coil form and the flux burden on the leading side of the welding arc.

External support structure has been attached to the welding head and extended along the strip for stability. A high temperature ceramic has been used to form this external strip support with a fair degree of success in carrying out its mission. However, frustrating as it may seem, one of the drawbacks to using the external support is that operating personnel have clumsily broken off the supports all too frequently. The problem is to provide columnar strength to the strip-electrode from within the strip itself. Internalization of the strip strength will eliminate the vulnerability to mechanical breakage which has been a drawback of the external supports.

Although the problem has been discussed in connection with the strip welding head being applied to the cladding of work surfaces with stainless steel, it is to be understood that this form of welding electrode is not considered as limited to cladding surfaces. Further, the strip electrode is not limited to stainless steel material. It is contemplated that strip-electrodes of other metals, and their alloys, may be utilized to build up welding material in areas other than flat surfaces. Whatever the welding duty, the problem is found in the need for support of that part of the electrode extending from the contact tip to the electrical arc between the strip end and work surface.

Summary of the Invention

The present invention contemplates providing a means to reform the shape of that length of strip-electrode extending between the welding head current contact tip and the work surface to give the columnar strength necessary for stability and consistency to the cladding process.

The invention further contemplates reformation of the strip-electrode by rolls mounted on the welding head through which the strip of cladding material passes while extending to the work surface.

The invention further contemplates that the feed rolls of the welding head both advance the strip-electrode toward the work surface and form the strip into an arc in the plane transverse the longitudinal axis of the strip.

Other objects, advantages and features of this invention will become apparent to one skilled in the art upon consideration of the written specification, appended claims and attached drawings.

Brief Description of the Drawings

Figure 1 is a somewhat schematic perspective view of a welding head cladding a work surface with a strip electrode, the arrangement embodying the present invention;

Figure 2 is a sectioned plan view of Figure 1 along lines 2-2; and

Figure 3 is a sectioned plan view of the welding electrode of Figure 2 along lines 3-3.

Description of the Preferred Embodiment

Strip electrode welding machines have been in use for some time. Disclosure of these machines is found in literature and patents. An example is U. S. Patent No. 4,027,135 "Apparatus and Method for Submerged Arc Strip Cladding of Metallic Work Pieces" by John Joseph Barger which issued May 31. 1977. Although this patent encapsulates the invention embodied in magnets strategically placed and operated to improve the plating carried out with these machines, it does describe some of the general features of strip-electrode welding.

In operation of the strip-electrode welder, a direct current voltage is applied between the work piece and the strip by the welding rectifier, and an arc is established between these two components. The arc causes the bottom edge of the strip to melt and the molten material is deposited in a generally linear cladding zone on the work piece of the trailing side of the advancing strip-electrode to form the weld bead on the work piece. It should be noted that the deposited weld material comprises a molten pool of weld material in the region immediately behind the trailing side of the strip-electrode. The molten metal pool is covered by a layer of molten slag (melted flux) which is covered in turn by a layer of unmelted welding flux. The molten slag, of course, solidifies to form a solid slag layer on the deposited weld bead at some distance behind the trailing side of the electrode strip. The pool of molten slag overlying the molten metal pool similarly extends slightly to the leading side of the strip-electrode and extends to the trailing side wherein it begins to solidify and form the layer of solid slag, the transition to solid slag being essentially complete at approximately the same point at which the molten metal pool has completely solidfied. During the weld-cladding melt-off process, the strip-electrode is continuously fed downwardly toward the work piece by feed rolls to provide a continuous source of cladding material.

One of the problems in this section of the welding art is the mechanical support of the electrode formed of relatively thin material having a width in the range of 1" to 6" and a length from 1" to 4". Of course, there are conditions of operation which set other ranges of electrode strip width, thickness and length in relation to the welding current and voltage. The present invention contemplates providing a better support for all of these strip-electrodes of various sizes.

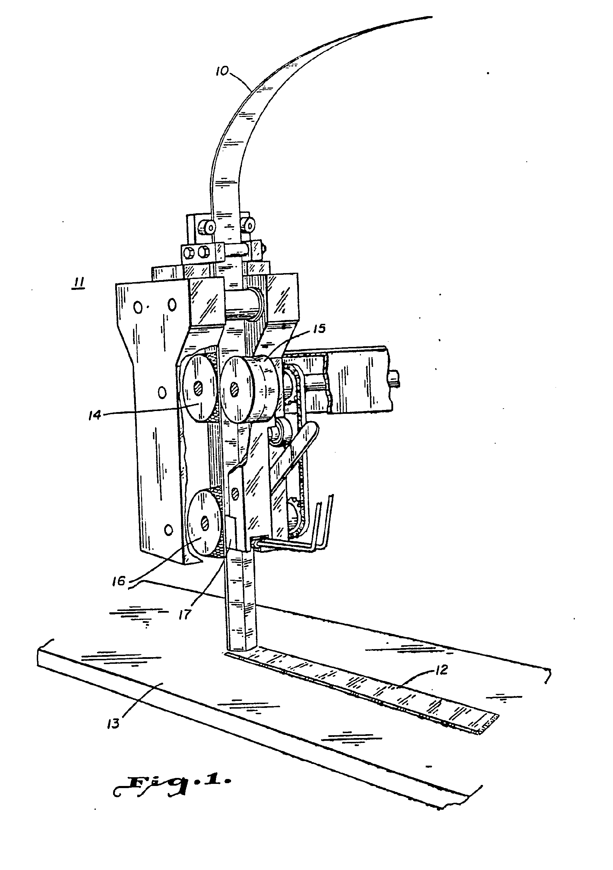

Figure 1 discloses all of the essential arrangements which embody the invention. The welding head is disclosed as hovering, from disembodied support structure, over the work area which is being clad. It is not felt necessary to devote disclosure to specific support of the welding head and the source of welding strip 10.

As if from out of nowhere, welding strip 10 is seen to extend down through head 11 and end up as a bead 12 on work surface 13. The control of the relative movement between the head 11 and work surface 13 is not a part of the present disclosure. The head 11 is moved to the left, as viewed in Figure 1, and the arc formed between the lower tip of the strip electrode 10 and the work surface 13 produces weld bead 12. In a very general sense, the head 11 provides structure to control the advance of strip 10 down toward the work surface 13. Also, provision is made to apply the electrical welding current to the strip, within the head, to generate the arc which melts the strip material and flux with which the arc is submerged. Although the supply of flux, and the arrangement for discharging the flux into the arc, is not disclosed, this is a well-established arrangement in the prior art. What is not well-established in the prior art is the arrangement embodying the present invention which gives columnar strength to that length of the strip between the head 11 and the arc at the work surface 13.

In order not to get ahead of our unique story, attention is directed to the head 11 which is formed of those frame members necessary to support the arrangements which positively feed the strip 10 from above to below the head 11. Basically, the strip is pulled through the head by rolls and a slidable electrical contact is maintained between the strip and a source of welding current.

To be additionally specific, top feed and alignment and strip shaping roll 14 is supported in head 11 to mesh with idler pressure roll 15. The metallic strip 10 is set between these rolls in fair resemblance to movie film fed through the mechanism of a projector. Directly below these rolls 14 and 15 is mounted a bottom feed alignment and contact support strip shaping roll 16. The strip is fed by rolls 14 and 15 down between roll 16 and electrode contact structure 17. Contact structure 17 is, of course, electrically connected to a source of welding current not shown. Strip 10 is then fed from its electrical connection with the welding current source down toward work surface 13. The expected arc is struck between surface 13 and the tip of strip 10 to generate the heat with which the material of the strip, and flux, is melted into forming bead 12.

The critical problem solved by the present invention centers about the length of strip 10 between contact 17 and work surface 13. The strip 10 may be 2" to 6" wide. This strip 10 thickness is in the order of .020" to .035". The length of this portion of strip 10 is established by the quantity of material required as an electrical path for the electrical current to the arc. The present disclosure does not have to elaborate on the factors which establish the desired length for this portion of strip 10 between contact structure 17 and surface 13. It is sufficient to emphasize that this length is at least in the order of 3" to 4". Further, it is desirable to emphasize that this length of strip 10 must have the degree of mechanical stability which will provide bead 12 with uniformity.

Ceramic support structures have been provided in the prior art. The ceramic supports have been extended from the head 11 and have been successful from certain standpoints. However, the support structures have been fragile and readily broken by operating personnel. Therefore, the present invention provides the required mechanical stability for strip 10.

Essential elements of the present invention are embodied in the form and arrangement of rolls 14 and 15. The surface configuration of these rolls brought into contact with strip 10 provides strip 10 with a permanent reformation which thereafter gives enough columnar strength to the strip to stabilize that length of the strip extending down from contact 17 to surface 13.

More specifically, the edge of one of the rolls is given a concave shape while the other of the rolls is given a convex shape. When the concave and convex edges of the rolls are applied to the strip 10, they reform the strip into an arc in a plane transverse the longitudinal axis of the strip.

Of course, the edge surfaces of the rolls 14 and 15 may not reform strip 10 to give it a precise, smooth form of arc. The rolls may provide a more or less creased line down the center of strip 10 which roughly conforms its transverse shape toward an arc. These variations, within the scope of the invention, are regarded as minor details. What is clear is that a deformation of the strip 10 is continuously provided as rolls 14 and 15 are powered by a motive means to pull strip 10 from its source, not shown, and extend the strip toward work surface 13.

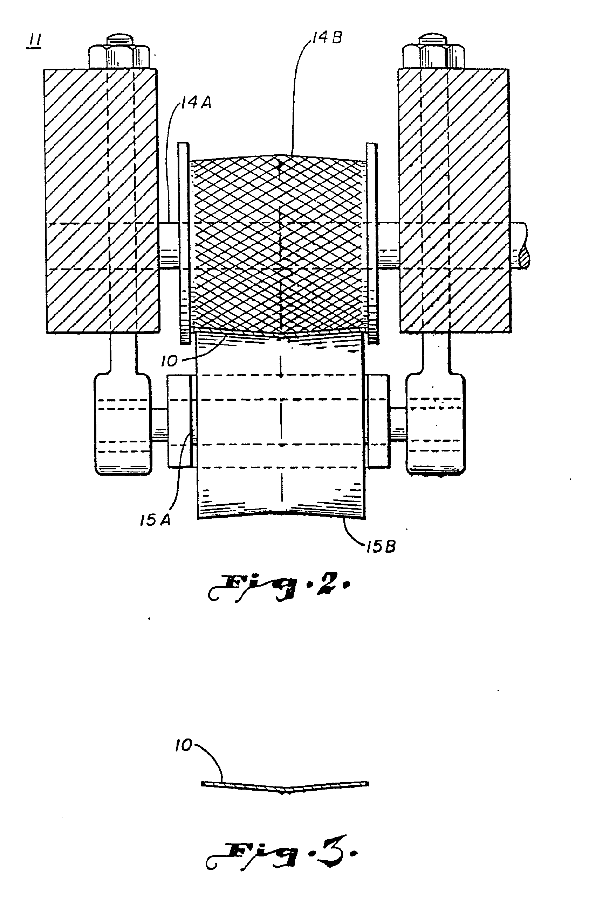

To provide further clarity to the roll structure of head 11 which works strip 10, Figure 2 is provided as a section along lines 2-2. In Figure 2, enough of the frame 11 members are shown to make it clear that shafts 14A and 15A are journalled in bearings with their edge surfaces 14-B and 15-B capturing strip 10 between them.

At least the edge surface of one of the rolls is knurled to increase the friction between the rolls and strip 10. In Figure 2, the surface 14-B is shown as knurled to provide the frictional engagement. Knurled as it is, surface 14-B is also convex in profile. Edge surface 15-B is given a concave profile. Surfaces 14-B and 15-B nest together and force the body of strip 10 to conform toward the desired arc extending in a plane transverse the longitudinal axis of strip 10.

A scale of Figure 1 allows a fair indication of the surface configuration of rolls 14 and 15 with strip 10 being worked by them. However, the scale of Figure 2 gives additive clarity to these mechanical relationships.

Figure 3 is thrown into the disclosure to dramatize the end product of the work provided by rolls 14 and 15. Figure 3 shows strip 10 as viewed on end. The concavity or convexity, depending on the point of view, gives strip 10 the desired columnar strength. So strengthened, the length of strip 10 between head 11 and surface 13 is mechanically stable during the cladding process. All the benefits of this stability descend upon the provision for the increased columnar strength afforded by the rolls 14 and 15.

Conclusion

An overview is made of the essential elements in which the invention is embodied. A welding head centralizes the rolls

0013374

which pull a thin strip of metal from a supply and feed this irbbon-like material down toward a work surface. A welding current is passed into this strip-electrode through a sliding contact within the welding head. The result is an electrical arc between the tip of the strip-electrode and a grounded work surface to form the working arc of the cladding process.

The problem is in the fragility and unsteadiness of that length of the strip-electrode between the welding head and the work surface. The answer of the invention is to stiffen the relatively thin ribbon of electrode so its tip supporting the arc to the work surface will be steady and reliable in forming the bead that clads the work surface. The stiffening is provided by reforming the strip into an arc in the plane transverse the longitudinal axis of the strip. This is the bottom line of the invention and is implemented by applying the edges of rolls 14 and 15 to the strip within the welding head.

The reformed strip descends from the shaping rolls downward, between roll 16 and electrode contact 17. Spring loaded, contact 17 is mechanically pressed against the surface of the strip-electrode to pass the huge welding current required at the arc between the tip of the strip and the work surface. Motive means is applied to rolls 14 and 15 and a chain link is provided between roll 14 and roll 16 to force-feed the welding strip through the head 11.

Of course, there are auxiliary activities surrounding the basic welding process. A supply of flux is customarily provided to submerge the electric arc. The structure for carrying out these auxiliary activities is either ignored or minimized in this disclosure to emphasize the invention.

Again, it is emphasized that the simple problem, and its solution by the present invention, is not in any way limited to the type of conductive material which makes up the strip-electrode. Further, the invention is not limited by the characteristics of the working surface upon which the weld material is deposited. In other words, the invention is not applied to a welding head which is used only to clad surfaces. The invention is in the structure of that part of the welding strip extending from the welding head to the work

0013374

surface and is not limited by the welding duty of the embodying apparatus.

From the foregoing, it will be seen that this invention is one well adapted to attain all of the ends and objects hereinabove set forth, together with other advantages which are obvious and inherent to the apparatus.

It will be understood that certain features and subcombinations are of utility and may be employed without reference to other features and subcombinations. This is contemplated by and is within the scope of the invention.

As many possible embodiments may be made of the invention without departing from the scope thereof, it is to be understood that all matter herein set forth or shown in the accompanying drawings is to be interpreted in an illustrative and not in a limiting sense.

CLAIMS

1. A welding apparatus which has a welding head utilizing an electrode in strip form, including:

a. a frame forming a welding head adapted to be moved over a work surface and from which a strip electrode depends to the work surface to deposit the material of the electrode in bead form;

b. a supply of welding electrode in strip form from which the electrode is pulled into the head and directed toward the work surface;

c. a means for connecting a supply of electrical energy to the strip electrode as the strip electrode is moved through the welding head to result in a welding arc being formed between the depending end of the welding electrode and the work surface; and

d. a pair of rolls mounted within the welding head frame and adapted and arranged to be rotated to apply surfaces to the welding electrode to reform the welding strip to an arc in a plane transverse the longitudinal axis of the strip.

2. The welding apparatus of Claim 1 in which the source of electrical power is connected to the electrode through a block assembly spring-urged against the surface of the stirp electrode as the strip electrode moves through the frame of the welding head.

3. The welding apparatus of Claim 1 in which the surfaces applied to reform the welding strip electrode are the surfaces of the rolls at least one of which is knurled to develop that friction with the electrode strip which will advance the strip-electrode through the head and toward the work surface while the strip is reformed to add columnar strength to that portion of the strip-electrode between the rolls and the arc formed between the end of the electrode and the work surface.

4. The welding apparatus of Claim 3 wherein one of the rolls is concave and the other is convex in shape to reform the strip electrode.

5. A means for weld-cladding a work surface with a predetermined material including:

a. a strip-clad electrode of predetermined material;

b. a pair of rolls adapted to be rotated and receiving the strip-clad electrode between them;

c. a knurled surface for at least one of the pair of rolls with which to grip and advance the end of the strip-clad electrode toward a work surface;

c. a third roll arranged parallel to the first pair of rolls;

d. an electrical contact body arranged to be urged toward the third roll and arranged to receive the strip-clad electrode between the third roll and the contact body;

e. a source of welding current connected to the contact body;

f. a connection between the first pair of rolls and the third roll to rotate the third roll in advancing the strip-clad electrode between the third roll and the contact body; and

g. a surface on the first pair of rolls to reform the contact body to an arc in a plane transverse the longitudinal axis of the strip-clad electrode, whereby the reshaped strip-clad electrode extending from the rolls toward the work surface is provided a columnar strength which will resist forces directed to displace the end of the strip-clad electrode from which an arc is generated by the welding current to the grounded work surface.

Fig.1.

0013374

Fig.2.

Fig.3.

## DOCUMENTS CONSIDERED TO BE RELEVANT

| Category | Citation of document with indication, where appropriate, of relevant passages | Relevant to claim |
|---|---|---|
| X | <u>GB - A - 1 013 259</u> (MUREX)<br><br>* Claim 1; figures; page 4, line 60 - page 5, line 5 *<br><br>-- | 1,2,4, 5 |
| X | <u>GB - A - 772 387</u> (UNION CARBIDE)<br><br>* Claim 1; figures; page 3, lines 23-45 *<br><br>-- | 1-5 |
| | <u>US - A - 3 936 654</u> (U. CANNATA)<br><br>* Claims; figures; column 4, line 17 - column 5, line 35 *<br><br>-- | 1-3,5 |
| A | WELDING PRODUCTION, vol. 25, no. 10, October 1978, pages 17-20 Abington, Cambridge, G.B.<br>A.S. ORLOV et al.: "Automatic submerged-arc welding with a shaped strip electrode"<br><br>* Pages 17-20 *<br><br>-- | |
| A,D | <u>US - A - 4 027 135</u> (J.J. BARGER)<br><br>---- | |

**CLASSIFICATION OF THE APPLICATION (Int. Cl.)**

B 23 K 35/06
       9/04
       9/18

**TECHNICAL FIELDS SEARCHED (Int.Cl.)**

B 23 K

**CATEGORY OF CITED DOCUMENTS**

X: particularly relevant
A: technological background
O: non-written disclosure
P intermediate document
T theory or principle underlying the invention
E conflicting application
D: document cited in the application
L: citation for other reasons

&: member of the same patent family. corresponding document

| | | | |
|---|---|---|---|
| ☒ | The present search report has been drawn up for all claims | | |
| Place of search<br>The Hague | Date of completion of the search<br>20-03-1980 | Examiner<br>MOLLET | |